# DEMANDE DE BREVET EUROPEEN

(11) **EP 0 863 391 A1**
(43) Date de publication de la demande: **09.09.1998**
(21) Numéro de dépôt: 98400376.4
(22) Date de dépôt: 17.02.1998
(51) Int. Cl.: G01L 1/14

(54) **Capteur de contraintes destiné à être noyé dans un milieu déformable ou à prise tel que du béton**

(30) Priorité: 03.03.1997 FR 9702499
(71) Demandeur: DASSAULT ELECTRONIQUE, F-92210 Saint-Cloud (FR)
(72) Inventeur: Nicole, Pierre, 92210 Saint Cloud (FR)
(74) Mandataire: Nicolle, Olivier

(57) **Abrégé**

Le capteur de contraintes destiné à être noyé dans un milieu déformable ou à prise tel que du béton comprend : un tube (TUB) creux, une tige (TIG), emmanchée axialement à force dans ledit tube, se prolongeant par un premier élément de référence (REF1) de surface plane et perpendiculaire à l'axe d'emmanchement de la tige d'une part, et se prolongeant par un plateau (PLA) perpendiculaire à l'axe d'emmanchement de la tige d'autre part ; un second élément de référence (REF2) appliqué contre l'épaulement périphérique (EP) de la seconde extrémité du tube (EX2) pour l'obturer ; et des moyens de mesure (ELE) propres à mesurer, à l'état de fonctionnement, la variation de la capacité entre les première et seconde électrodes (EL1 et EL2) correspondant à la variation de la distance (D) entre le plateau (PLA) et le second élément de référence (REP2), afin d'en déduire les contraintes appliquées sur le capteur selon une direction parallèle à l'axe (X) d'emmanchement de la tige.

## Description

La présente invention concerne un capteur de contraintes destiné à être noyé dans un milieu déformable, ou a prise tel que du béton.

Dans sa Demande de Brevet FR-A-2 714 562, la Demanderesse a décrit un dispositif interrogateur à distance d'une pluralité de sondes par exemple noyées dans du béton et aptes à capturer des grandeurs physiques caractérisant ledit béton à des points et instants donnés.

La Demanderesse s'est posé le problème de fournir un capteur de contraintes destiné à être noyé dans un tel milieu déformable ou à prise, et le cas échéant apte à fonctionner avec un tel dispositif interrogateur en vue de délivrer des grandeurs physiques représentatives des contraintes appliquées sur ledit capteur et caractérisant ledit béton à des points et instants donnés.

La présente invention apporte une solution à ce problème.

Selon une définition générale de l'invention, le capteur de contraintes destiné à être noyé dans un milieu déformable ou à prise tel que du béton, comprend :
- un tube creux, cylindrique et comprenant des première et seconde extrémités ouvertes, la seconde extrémité comprenant un épaulement périphérique s'étendant vers l'extérieur du tube;
- une tige pleine, cylindrique, emmanchée axialement à force dans ledit tube, et possédant une première extrémité se prolongeant par un premier élément de référence ayant une surface plane et perpendiculaire à l'axe d'emmanchement de la tige, et une seconde extrémité se prolongeant par un plateau perpendiculaire à l'axe d'emmanchement de la tige et destiné à former une première électrode ;
- un second élément de référence destiné à former une seconde électrode, ayant une surface plane et perpendiculaire à l'axe d'emmanchement de la tige et appliqué contre l'épaulement périphérique de la seconde extrémité du tube pour l'obturer, les longueurs de la tige et du tube étant choisies de telle sorte qu'à l'état initial, une distance d'une valeur choisie sépare le plateau du second élément de référence ; et
- des moyens de mesure propres à mesurer, à l'état de fonctionnement, la variation de la capacité entre les première et seconde électrodes correspondant à la variation de la distance entre le plateau et le second élément de référence, afin d'en déduire les contraintes appliquées sur le capteur selon une direction parallèle à l'axe d'emmanchement de la tige.

En pratique, la longueur de la tige est choisie en fonction de la granulométrie du milieu dans lequel est noyé ledit capteur.

Selon un autre aspect de l'invention, la surface externe du tube entre les premier et second éléments de référence est enveloppée d'un manchon constitué d'un matériau propre à réduire l'adhérence du milieu dans le sens longitudinal du capteur entre lesdits premiers et seconds éléments de référence.

Selon une autre caractéristique importante de l'invention, la surface externe de la tige, hormis celle du plateau, est recouverte d'une couche d'un matériau choisi pour permettre l'emmanchement axial à force de la tige dans le tube.

De préférence, les premier et second éléments de référence sont symétriques et de forme cylindrique pour faciliter l'accrochage ou l'adhérence du milieu sur lesdits premier et second éléments de référence.

En pratique, le matériau constitutif des premier et second éléments de référence ainsi que de la tige est de l'acier inoxydable.

Avantageusement, le matériau constitutif du manchon de la tige est une résine telle que le DELRIN (marque déposée).

De même, le matériau constitutif du manchon du tube est une résine telle que le DELRIN.

De préférence, les moyens de mesure comprennent un oscillateur à comparateur à hystérésis ou un oscillateur à réseau double T, dans lequel l'une des capacités constitutives dudit oscillateur correspond à la capacité à mesurer, la variation de ladite capacité étant transformée en variation de fréquence de l'oscillateur.

Selon un autre aspect de l'invention, l'une au moins des première et seconde électrodes est divisée en une pluralité de quadrants métallisés, en vue de constituer, en association avec l'autre électrode, une pluralité de capacités, les moyens de mesure étant aptes à mesurer les variations de chaque capacité afin d'en déduire en outre les forces de cisaillement appliquées sur le capteur perpendiculairement à l'axe d'emmanchement de la tige.

La présente invention a également pour objet une installation de capture de contraintes dans au moins deux directions orthogonales entre elles. Selon la présente invention, cette installation comprend au moins deux capteurs du type visé ci-avant et dans laquelle chaque tube est disposé orthogonalement l'un par rapport à l'autre, chaque premier élément de référence étant assemblé l'un à l'autre.

D'autres caractéristiques et avantages de l'invention apparaîtront à la lumière de la description détaillée ci-après et des dessins annexés dans lesquels :
- la figure 1 est une vue en coupe du capteur selon l'invention ;
- la figure 2 est une vue analogue à la figure 1 avec les cotes des éléments essentiels et constitutifs du capteur selon l'invention ;
- la figure 3 est une vue en coupe d'une installation à deux capteurs selon l'invention ;
- la figure 4 est une représentation schématique illustrant les forces de cisaillement appliquées perpendiculairement à l'axe longitudinal du capteur selon l'invention ; et
- les figures 5 et 6 représentent schématiquement la division de la seconde électrode en quatre quadrants pour permettre la mesure des forces de cisaillement selon l'invention.

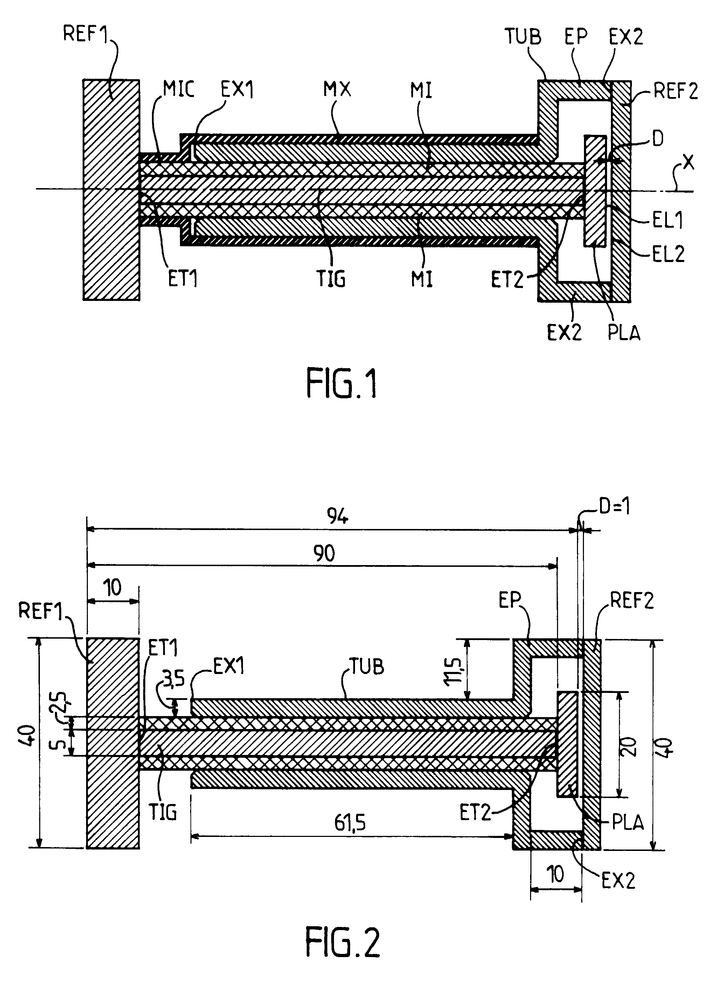

En référence à la figure 1, le capteur de contraintes est destiné à être noyé dans un milieu déformable ou à prise tel que du béton.

L'un des problèmes de mise en oeuvre du capteur selon l'invention, réside dans le choix de la structure mécanique qui va être chargée de transmettre les efforts du capteur au cours de la vie de l'ouvrage en béton, tout en évitant l'écrasement dudit capteur lors de la mise en place dans ledit milieu à béton.

Selon l'invention, le capteur comprend un tube creux cylindrique TUB constitué d'un matériau ayant une résistance mécanique supérieure à celle du béton, par exemple de l'acier inoxydable.

Le tube TUB comprend des première EX1 et seconde EX2 extrémités ouvertes. La seconde extrémité EX2 se prolonge par un épaulement périphérique EP s'étendant vers l'extérieur du tube.

Une tige TIG pleine, cylindrique, est emmanchée axialement à force dans le tube dans le sens EX1 vers EX2. La tige possède une première extrémité ET1 se prolongeant par un premier élément de référence REF1 ayant une surface plane et perpendiculaire à l'axe d'emmanchement X de la tige, et une seconde extrémité ET2 se prolongeant par un plateau PLA perpendiculaire à l'axe d'emmanchement X de la tige.

Ce plateau PLA est destiné à former une première électrode EL1.

Le capteur comprend en outre un second élément de référence REF2 destiné à former une seconde électrode EL2. Ce second élément de référence a une surface plane et perpendiculaire à l'axe d'emmanchement X de la tige et appliqué contre l'épaulement EP périphérique de la seconde extrémité EX2 du tube pour l'obturer.

En pratique, le second élément de référence REF2 est fixé dans l'épaulement EP.

Les premier et second éléments de référence REF1 et REF2 sont symétriques et de forme cylindrique pour favoriser l'accrochage ou l'adhérence du milieu sur lesdits premier et second éléments de référence.

Ces éléments de référence ainsi que la tige sont constitués d'un matériau de type acier, de préférence inoxydable.

Selon l'invention, les longueurs de la tige et du tube sont choisies de telle sorte qu'à l'état initial, une distance D d'une valeur choisie sépare le plateau PLA du second élément de référence REF2.

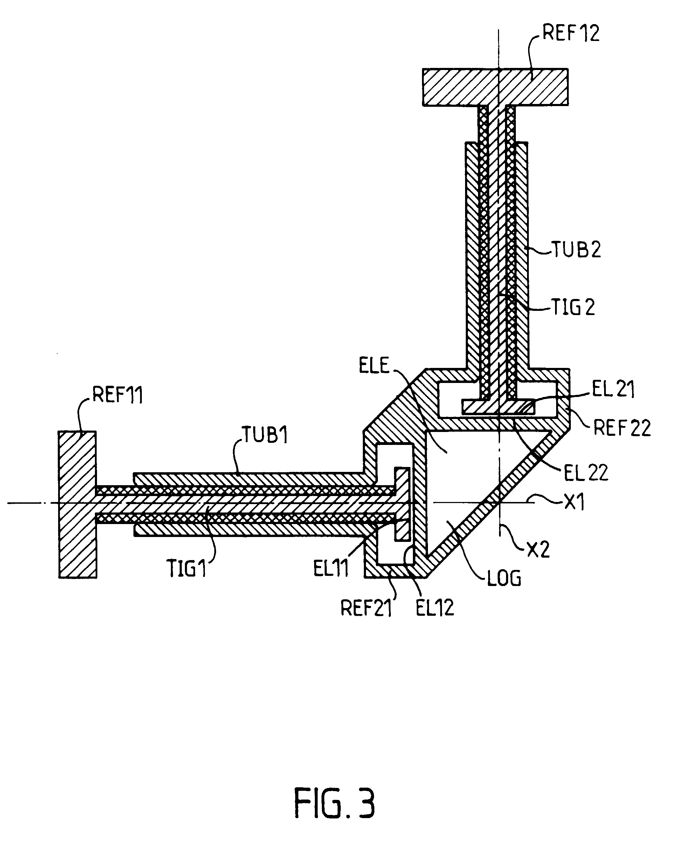

Selon l'invention, des moyens de mesure (représentés en figure 3) sont prévus pour mesurer en fonctionnement la variation de la capacité entre les première EL1 et seconde EL2 électrodes correspondant à la variation de la distance D entre le plateau PLA et le second élément de référence REF2, afin d'en déduire les contraintes appliquées sur le capteur selon une direction parallèle à l'axe d'emmanchement X de la tige.

Les moyens de mesure de la distance D (par exemple de l'ordre de 1 mm) comprennent un oscillateur de fréquence dont l'une des capacités constitutives dudit oscillateur correspond à la capacité formée par les électrodes EL1 et EL2. La variation de cette capacité se transforme en variation de fréquence à partir de laquelle on déduit la valeur de D.

Plusieurs montages d'oscillateurs sont possibles pour réaliser cette fonction de mesure de variation de capacité. On connaît par exemple les montages de COLPITTS, CLAPP, HARTLEY ou PIERCE dans lesquels la capacité à mesurer peut être l'une des capacités desdits montages. Mais dans de tels montages, les valeurs des inductances nécessaires pour atteindre la sensibilité recherchée selon l'invention (ici de l'ordre de 0,25 pour des contraintes allant de -50 à 800 bars) sont très supérieures au Henry, ce qui rend difficile l'usage de tels oscillateurs comme moyens de mesure pour l'application selon l'invention.

Une meilleure solution consiste à utiliser un oscillateur à comparateur à hystérésis ou un oscillateur à réseau double T, bien connu de l'homme de l'art, et décrit dans les ouvrages d'électronique tels que "Electronique pratique" BORDAS, ISBN No 2-04-015907-X, Paris, 1984, par A. PEREZ-MAS et J.M. FOUCHET, pages 337 et suivantes. L'oscillateur à réseau double T présente ici l'avantage d'être relativement indépendant des problèmes techniques et de variation du niveau des alimentations.

On fait de nouveau référence à la figure 1.

Très avantageusement, la surface externe du tube, entre les premier et second éléments de référence REF1 et REF2, est enveloppée d'un manchon externe MX constitué d'un matériau propre à réduire l'adhérence du milieu dans le sens longitudinal du capteur entre lesdits premier et second éléments de référence. Ce manchon MX est constitué d'un matériau du type résine telle que du DELRIN afin de réduire l'adhérence du béton dans le sens longitudinal du capteur.

Par ailleurs, la surface externe de la tige, hormis le plateau PLA, est recouverte d'un manchon MI constitué d'un matériau choisi pour permettre l'emmanchement axial à force de la tige dans le tube. De préférence, ce manchon interne est nervuré par des sillons destinés à améliorer ou faciliter le forçage de la tige. Ce matériau améliore en outre l'alignement de la tige dans le tube. Par exemple, ce matériau est du DELRIN noir.

Le DELRIN constitue un bon matériau car sa porosité et sa plasticité correspondent aux sollicitations mécaniques différentielles du béton. D'autres matériaux peuvent aussi répondre à ces besoins.

En référence à la figure 2, on retrouve les cotes des éléments essentiels et constitutifs du capteur selon l'invention.

La distance D entre les deux électrodes est de l'ordre de 1 mm à l'état initial ou de référence. La longueur de la tige, hors plateau, est de 79mm. la longueur du tube de l'extrémité EX1 à l'extrémité EX2, hors élément de référence REF2 est de 80 mm.

Il est à remarquer que l'élément de référence REF2 est vissé sur l'épaulement EP du tube. Cet élément de référence REF2 joue le rôle d'un capot fermant le tube. Cette fermeture est réalisée par exemple par soudure au laser ou bien vissée.

Le montage du capteur s'effectue de la façon suivante.

Tout d'abord, il convient de présenter la tige TIG dans l'axe longitudinal X du tube de telle sorte que le plateau PLA soit parallèle aux éléments de référence REF1 et REF2.

On procède ensuite à l'emmanchement à force jusqu'au 2/3 de la tige dans le tube, en s'assurant de la continuité de l'alignement axial de la tige dans le tube.

On positionne ensuite une cale (non représentée) d'une épaisseur choisie pour assurer une distance D de 1mm entre le plateau PLA et le second élément de référence REF2.

On poursuit l'emmanchement de la tige jusqu'à ce que la cale vienne en butée sur l'élément de référence REF2. On retire la cale. Et on referme le tube par vissage ou soudure de l'élément de référence REF2 sur l'extrémité à épaulement EP du tube.

Le manchon externe MX est ensuite appliqué autour de la surface externe du tube TUB ainsi que sur la partie du manchon MIC non recouvert par le tube.

En référence à la figure 3, on a représenté une installation comprenant deux capteurs du type décrit ci-avant en référence aux figures 1 et 2. Cette installation est capable de mesurer des contraintes sur deux directions orthogonales X1 et X2 entre elles. Cette installation permet aussi une adaptabilité d'échelle selon la taille des granulats environnants ou des hétérogénéités du milieu dans lequel sont noyés les capteurs.

Cette installation à deux capteurs peut aussi être complétée avantageusement par un troisième capteur monté selon une troisième direction orthogonale (non représentée) aux deux premières X1 et X2.

En pratique l'installation à deux ou trois capteurs comprend un premier tube TUB1 identique à celui décrit en référence à la figure 1 avec les références suivies ici d'un 1. La tige TIG1 est emmanchée selon l'axe X1.

L'installation comprend au moins un second tube TUB2 identique à celui décrit en référence à la figure 1 avec les références suivies ici d'un 2. La tige TIG2 est emmanchée selon l'axe X2 perpendiculaire à X1.

Des moyens de mesure ELE sont logés dans un logement LOG défini par l'assemblage des éléments de référence REF21 et REF22. Ces moyens de mesure sont propres à mesurer, à l'état de fonctionnement, la variation de la capacité entre les première et seconde électrodes EL11 et EL21 du premier capteur, et la variation de la capacité entre les premier et seconde électrodes EL12 et EL22 du second capteur, afin d'en déduire les contraintes appliquées sur lesdits capteurs selon des directions X1 et X2.

Il est à remarquer que les éléments de référence REF21 et REF22 qui sont assemblés l'un à l'autre, forme ici le noeud de l'installation à multi capteurs autour duquel s'éloignent ou se rapprochent les tiges des capteurs.

Dans la pratique, il est possible d'obtenir des capteurs de sensibilité différente correspondant à des raideurs différentes de l'emmanchement à force de la tige dans le tube.

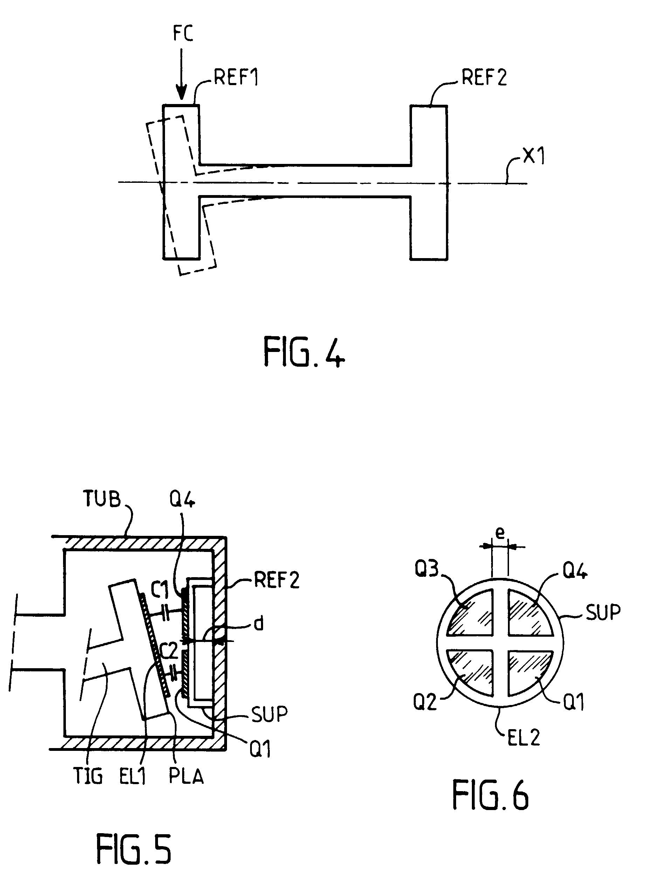

En plus de la mesure de contraintes longitudinales selon plusieurs axes ou directions orthogonales X1, X2 ou X3, le capteur selon l'invention permet en outre de mesurer les forces de cisaillement FC (figure 4) qui sont appliquées généralement perpendiculairement à chacun des axes et qui ont le plus souvent une sensibilité de l'ordre de cent fois inférieure à celle correspondant aux contraintes longitudinales.

En référence aux figures 5 et 6, au moins l'une des électrodes, ici l'électrode EL2, est constituée d'un support en céramique SUP divisé en quatre quadrants métallisés Q1 à Q4. Chacun des quadrants Q1 à Q4 constitue, en association avec l'électrode EL1, une capacité Ci (avec i = 1, 2, 3, 4).

Selon l'invention, les moyens de mesure ELE sont aptes à mesurer séparément les fréquences ou variations associées à chaque capacité Ci afin d'obtenir non seulement l'éloignement ou le rapprochement des électrodes EL1 et EL2 (distance D) mais aussi l'inclinaison relative (en deux dimensions) des axes des électrodes.

Pour la bonne mise en oeuvre de la mesure, il convient que l'écartement e entre les quadrants (figure 6) soit supérieur à l'écartement maximal D entre les électrodes EL1 et EL2, en vue de limiter l'influence purement électrique des quadrants Qi les uns par rapport aux autres.

En pratique, il est avantageux de commuter les quadrants Oi pour que les moyens de mesure n'utilisent qu'un seul oscillateur et ainsi limiter les dérives éventuelles entre plusieurs oscillateurs. Par ailleurs, il convient que les quadrants métallisés Qi soient éloignés d'une distance d de la face interne métallique de l'élément de référence REF2 pour limiter les capacités parasites, cette distance d devant être égale à 3 ou 4 fois l'écartement maximal D entre les électrodes EL1 et EL2 (ici égal à 1 mm).

## Revendications

1. Capteur de contraintes destiné à être noyé dans un milieu déformable ou à prise tel que du béton, ledit capteur comprenant :
- un tube (TUB) creux, cylindrique et comprenant des première (EX1) seconde extrémités ouvertes (EX2), la seconde extrémité (EX2) comprenant un épaulement périphérique (EP) s'étendant vers l'extérieur du tube;
- une tige (TIG) pleine, cylindrique, emmanchée axialement à force dans ledit tube, et possédant une première extrémité (ET1) se prolongeant par un premier élément de référence (REF1) de surface plane et perpendiculaire à l'axe d'emmanchement de la tige, et une seconde extrémité (ET2) se prolongeant par un plateau (PLA) perpendiculaire à l'axe d'emmanchement de la tige et destinée à former une première électrode (EL1) ;
- un second élément de référence (REF2) destiné à former une seconde électrode (EL2), de surface plane et perpendiculaire à l'axe d'emmanchement de la tige et appliqué contre l'épaulement périphérique (EP) de la seconde extrémité du tube (EX2) pour l'obturer, les longueurs de la tige et du tube étant choisies de telle sorte qu'à l'état initial, une distance (D) d'une valeur choisie sépare le plateau (PLA) du second élément de référence (REP2) ; et
- des moyens de mesure (ELE) propres à mesurer, à l'état de fonctionnement, la variation de la capacité entre les première et seconde électrodes (EL1 et EL2) correspondant à la variation de la distance (D) entre le plateau (PLA) et le second élément de référence (REP2), afin d'en déduire les contraintes appliquées sur le capteur selon une direction parallèle à l'axe (X) d'emmanchement de la tige.

2. Capteur selon la revendication 1, caractérisé en ce que le tube (TUB), la tige (TIG) et les premier et second éléments de référence (REF1 et REF2) sont constitué d'un matériau ayant une résistance mécanique supérieure à celle du milieu.

3. Capteur selon la revendication 2, dans lequel le matériau constitutif des premier et second éléments de référence (REF1 et REF2), le tube (TUB) et la tige (TIG) est de l'acier inoxydable.

4. Capteur selon la revendication 1, dans lequel la longueur de la tige est choisie en fonction de la granulométrie du milieu dans lequel est noyé le capteur.

5. Capteur selon la revendication 1, dans lequel au moins la surface externe entre les premier et second éléments de référence (REF1 et REF2) est enveloppée d'un manchon (MX) constitué d'un matériau propre à réduire l'adhérence du milieu dans le sens longitudinal du capteur entre lesdits premier et second éléments de référence (REF1 et REF2).

6. Capteur selon la revendication 1, dans lequel la surface externe de la tige hormis le plateau (PLA) est recouverte d'un manchon (MI) constitué d'un matériau choisi pour permettre l'emmanchement axial à force de la tige dans le tube.

7. Capteur selon la revendication 1, dans lequel les premier et second éléments de référence (REF1, REF2) sont symétriques et de forme cylindrique pour faciliter l'accrochage du milieu sur lesdits premier et second éléments de référence.

8. Capteur selon la revendication 5, dans lequel le matériau constitutif du manchon (MX) du tube est une résine telle que du DELRIN.

9. Capteur selon la revendication 6, dans lequel le matériau constitutif du manchon (MI) de la tige est une résine telle que du DELRIN.

10. Capteur selon l'une des revendications précédentes, caractérisé en ce que les moyens de mesure (ELE) comprennent un oscillateur à comparateur à hystérésis ou un oscillateur à réseau double T, dans lequel l'une des capacités constitutives dudit oscillateur correspond à la capacité à mesurer, la variation de ladite capacité étant transformée en variation de fréquence de l'oscillateur.

11. Capteur selon l'une des revendications précédentes, caractérisé en ce que l'une au moins des première et seconde électrodes (EL1 et EL2) est divisée en une pluralité de quadrants métallisés (Q1 à Q4), en vue de constituer, en association avec l'autre électrode, une pluralité de capacités (C1 à C4), les moyens de mesure (ELE) étant aptes à mesurer les variations de chaque capacité afin d'en déduire en outre les forces de cisaillement (FC) appliquées sur le capteur perpendiculairement à l'axe (X1) d'emmanchement de la tige.

12. Installation de capture de contraintes dans au moins deux directions orthogonales (X1 et X2) entre elles, comprenant au moins deux capteurs selon l'une des revendications précédentes dans laquelle chaque tube est disposé orthogonalement l'un par rapport à l'autre, chaque second élément de référence (REF21 et REF22) étant assemblé l'un à l'autre.
